Europäisches Patentamt

European Patent Office

Office européen des brevets

(19)

(11) Veröffentlichungsnummer: **0 093 345**
A2

(12) **EUROPÄISCHE PATENTANMELDUNG**

(21) Anmeldenummer: 83103938.3

(22) Anmeldetag: 22.04.83

(51) Int. Cl.³: **F 24 J 3/04**
**F 25 B 49/00**

(30) Priorität: 03.05.82 DE 8213014 U

(43) Veröffentlichungstag der Anmeldung:
09.11.83 Patentblatt 83/45

(84) Benannte Vertragsstaaten:
AT BE CH DE FR GB IT LI LU NL SE

(71) Anmelder: Joh. Vaillant GmbH u. Co
Berghauser Strasse 40 Postfach 10 10 20
D-5630 Remscheid 1(DE)

(72) Erfinder: Kantner, Alexander, Dr.
Paul-Windgassen-Strasse 99
D-5630 Remscheid - 11(DE)

(74) Vertreter: Heim, Johann-Ludwig
c/o Joh. Vaillant GmbH u. Co Postfach 10 10 20
Berghauser Strasse 40
D-5630 Remscheid 1(DE)

(54) **Wärmepumpe.**

(57) Die vorliegende Erfindung bezieht sich auf eine Wärmepumpe mit einem Austreiber, Kondensator, Expansionsdrosselstelle und einem Verdampfer, die innerhalb eines Kreislaufes miteinander verbunden sind.

Werden einer solchen Wärmepumpe nur geringe Leistungen abverlangt, ist der Durchsatz an Kältemittel beziehungsweise Lösungsmittel sehr gering.

Der vorliegenden Erfindung liegt mithin die Aufgabe zu Grunde, kleine Querschnitte am Expansionsventil oder in der Expansionsdrosselstelle zu vermeiden. Die Lösung besteht erfindungsgemäß in stromauf der Expansionsdrosselstelle angeordneten Sammelräumen, denen ein normales Auslaßventil zugeordnet ist, dessen Öffnungs-/Schließzeiten nach einem Puls-Pausen-Verhältnis getaktet sind.

Fig 1

EP 0 093 345 A2

- 1 -

Wärmepumpe

Die vorliegende Erfindung bezieht sich auf eine Wärmepumpe
gemäß dem Oberbegriff des Hauptanspruchs.

Solche Wärmepumpen, seien es Kompressions-, Absorptions- oder
Resorptionswärmepumpen, bilden einen Kreislauf mindestens
für ein Kältemittel, gegebenenfalls auch noch für ein Lösungsmittel, wobei dieser Kreislauf in ein Hochdruck- (Hochtemperatur-) und ein Niederdruck- (Niedertemperatur-) teil aufgeteilt werden kann. Hoch- und Niederdruckteile stehen einmal über das Expansionsventil in Richtung auf den Niederdruckteil beziehungsweise über den Verdichter oder Generator beziehungsweise Kocher in Richtung auf den Hochdruckteil miteinander in Verbindung.

Allen Wärmepumpen ist es gemeinsam, daß das Kältemittel im

- 2 -

Expansions- oder einem vergleichbaren Bauteil entspannt wer-0093345
den muß, damit es anschließend dem Verdampfer zugeführt werden kann, um dort Umweltwärme aufzunehmen. Insbesondere bei
geringen Leistungen der Wärmepumpe ist der Durchsatz an Kältebeziehungsweise Lösungsmittel sehr gering. Das bedingt, daß
im Expansionsventil oder in der Expansionsdrosselstelle relativ kleine Querschnitte einzustellen beziehungsweise auf
längere Zeit eingestellt gehalten sein müssen. Solche kleinen Querschnitte sind einmal teuer in der Herstellung und
zum anderen schwierig konstant zu halten, außerdem sind sie
empfindlich gegen Verschmutzung, beziehungsweise ist die Langzeitkonstanz des Durchlaßquerschnittes schwer zu reproduzieren.

Der vorliegenden Erfindung liegt mithin die Aufgabe zugrunde,
für das Problem des Einhaltens der kleinen Querschnitte im
Zuge des Kältemitteldampf- beziehungsweise Lösungsmittelweges
eine Lösung zu finden.

Die Lösung dieser Aufgabe gelingt erfindungsgemäß mit den
im kennzeichnenden Teil des Hauptanspruchs angegebenen Maßnahmen.

Somit ist bei einer Kompressionswärmepumpe zwischen Kondensator und Verdampfer ein Sammelraum vorgesehen, der erst nach
ausreichender Füllung durch Öffnen des ihm nachgeschalteten
Absperrventils in den Verdampfer gegeben wird. Bei einer Absorptionswärmepumpe finden sich analog Sammelräume einmal

- 3 -

**0093345**

zwischen Kondensator und Verdampfer im Zuge des Kältemitteldampf-Weges, zum anderen zwischen Austreiber und Absorber
im Zuge des Leitungsweges für arme Lösung. Auch hier wird
bei der Funktion zunächst der Sammelraum mit Kältemitteldampf
beziehungsweise Lösungsmittel gefüllt, das anschließend schubweise in die nachgeschalteten Teile des Kreislaufes gegeben
wird.

Bei einer Resorptionswärmepumpe sind die Verhältnisse analog. Da für einen ordnungsgemäßen Betrieb nur der Durchsatz
einer bestimmten Volumenmenge in der Zeiteinheit notwendig
ist, ist es belanglos, ob während einer kurzen Zeitdauer ein
großer Volumenstrom oder während einer verhältnismäßig langen Zeitdauer ein kleiner Volumenstrom im Kreislauf weitergegeben wird. Es läßt sich nur der große Volumenstrom leichter verwirklichen und genauer einhalten als der kleine Volumenstrom während einer langen Zeit.

Weitere Ausgestaltungen und besonders vorteilhafte Weiterbildungen der Erfindung gehen aus den Unteransprüchen sowie
der nachfolgenden Beschreibung hervor, die ein Ausführungsbeispiel der Erfindung anhand der Figuren eins bis drei der
Zeichnung näher erläutert.

Es zeigen

Figur eins ein Schaltschema einer Absorptionswärmepumpe,

- 4 -

**0093345**

Figur zwei ein Schaltschema einer Kompressionswärmepumpe und

Figur drei ein Diagramm.

In allen drei Figuren bedeuten gleiche Bezugszeichen jeweils die gleichen Einzelheiten.

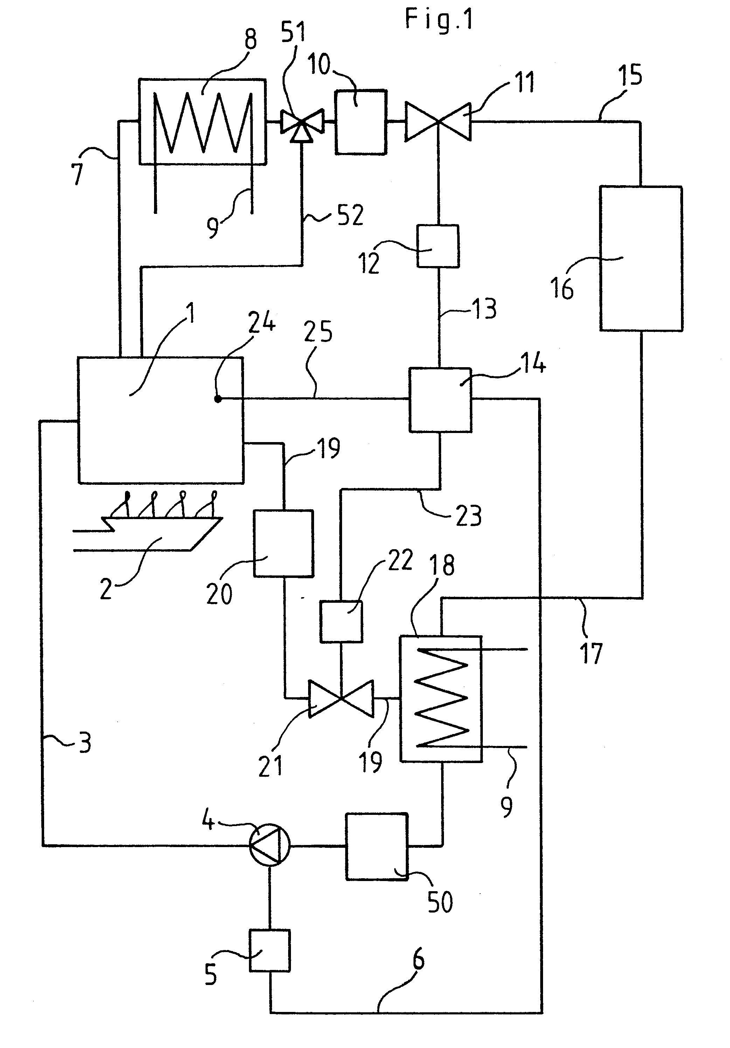

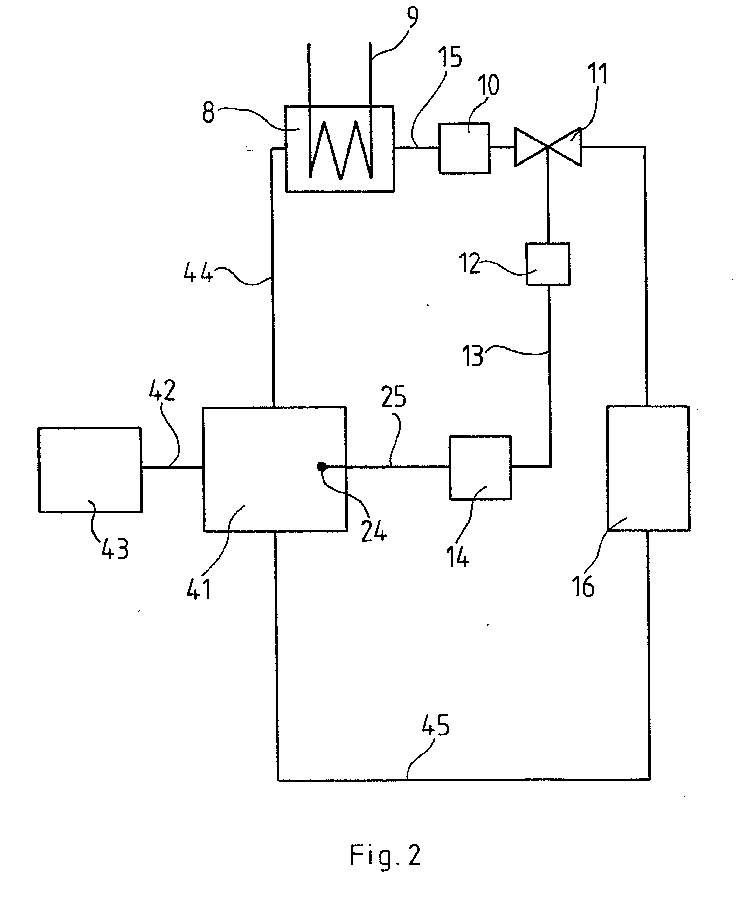

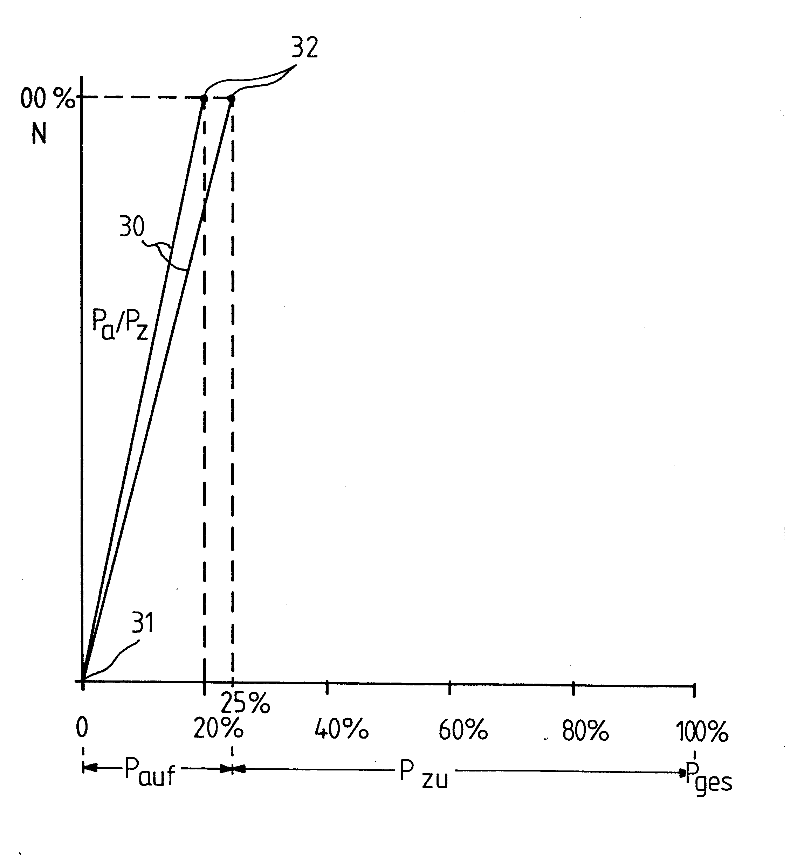

In der Figur eins ist 1 ein Kocher, der von einem Brenner 2 beheizt wird. Dem Kocher wird eine reiche Lösung über eine Rückflußleitung 3 zugeführt, die mit einer Umwälzpumpe 4 versehen ist, deren Antriebsmotor 5 über eine Stelleitung 6 mit elektrischer Energie beaufschlagt wird.

Vom Kocher führt eine Leitung 7 für Kältemitteldampf zu einem Kondensator 8, der einen Wärmetauscher zur Speisung eines Verbrauchers 9 bildet. Ausgangsseitig des Kondensators 8 ist ein Sammelraum 10 angeordnet. In der Verbindungsleitung liegt ein Drei-Wege-Ventil 51, dessen einer Anschluß zu einer Rückführleitung 52 zum Austreiber führt und dessen zweiter Ausgang an den Sammelraum 10 angeschlossen ist. Das Ventil besitzt nur zwei Stellungsmöglichkeiten. Dem Ausgang des Sammelraumes ist ein Ventil 11 zugeordnet, das von einem Stellglied 12 beherrscht ist, dessen Stelleitung 13 zu einem Steuerglied 14 führt, von dem auch die Leitung 6 abgeht. Vom Sammelraum 10 führt eine Leitung 15 für flüssiges Kältemittel zu einem Verdampfer 16, von dem eine Kältemitteldampf-Leitung 17 zu einem Absorber 18, den eine Verbraucher-Wärmetauscherrohrschlange durchsetzt, führt. Ausgangsseitig des

- 5 -

0093345

Absorbers 18 ist die Leitung 3 angeschlossen, wobei zwischen
Pumpe 4 und Absorber 18 ein Sammelraum 50 für reiche Lösung
vorgegeben ist.

Vom Kocher 1 geht eine Leitung 19 für arme Lösung ab, die
über einen Sammelraum 20, in dessen Ausgang ein Ventil 21
angeordnet ist, dessen Stellglied 22 mit einer Stelleitung
23 verbunden ist, die von der Steuervorrichtung 14 ausgeht.
Die Leitung 19, in der der Sammelraum und das Ventil 21 vorgesehen sind, mündet im Absorber 18.

Den Innenraum des Kochers 1 fühlt ein Temperatur- oder Druckfühler 24 ab, der über eine Meßleitung 25 mit der Steuervorrichtung 14 verbunden ist.

Die eben geschilderte Absorptionswärmepumpe besitzt folgende Funktion: Durch den dem Brenner zugeführten Brennstoff,
der verbrannt wird, wird der Kocher beheizt. Die über die
Leitung 3 zugeführte reiche Lösung trennt sich in Kältemitteldampf, der über die Leitung 7, und in arme Lösung, die
über die Leitung 19 dem Innenraum des Kochers entnommen wird.
Der Kältemitteldampf wird im Kondensator 8 unter dem Einfluß
des sich dort aufhaltenden Verbraucherfluids abgekühlt und
kondensiert. Der verflüssigte Kältemitteldampf strömt in den
Sammelraum 10, bis dort eine bestimmte Menge gesammelt ist.
Das gleiche geschieht mit der armen Lösung, die über die Leitung 19 in den Sammelraum 20 eintritt. Bei Erreichen bestimmter Füllstandsgrade in den Sammelräumen 10 und 20 werden durch einen Befehl der Steuervorrichtung 14 auf den Leitungen 13 und 23 die Stellglieder 12 und 22 betätigt, so daß die Ventile 11 und 21 öffnen. Beim Öffnen dieser Ventile werden in relativ kurzer Zeit relativ große Mengen vom flüssigem Kältemitteldampf beziehungsweise armer Lösung in die Leitung 15 beziehungsweise 19 in den Verdampfer 16 beziehungsweise in den Absorber 18 gegeben. Der verflüssigte Kältemitteldampf wird unter dem Einfluß einer Umweltenergiequelle im Verdampfer 16 verdampft und anschließend über die Leitung 17 dem Absorber 18 zugeführt. Hier vereinigen sich Kältemitteldampf und arme Lösung zu reicher Lösung, die über die Pumpe 4 wiederum in den Kocher 1 gefördert wird. Für den Kreislauf der Absorptionswärmepumpe ist es wichtig, daß der Kältemitteldampf-Transport und der Transport an armer Lösung in einem bestimmten Verhältnis und einer ganz bestimmten absoluten Menge zueinander stehen. Dieses Verhältnis und die benötigten Mengen können durch einen Pulspausenbetrieb der Stellglieder 12 und 22 über weite Arbeitsbereiche eingestellt werden.

Es hat sich als vorteilhaft herausgestellt, den Inhalt des Sammelraums 10 wie folgt zu bemessen:

Es wird davon ausgegangen, daß der maximale Durchsatz an Ammoniak pro Stunde im Auslegungspunkt der Wärmepumpe, das heißt bei etwa minus 5 °C, 12,5 kg pro Stunde beträgt. Um diesen Durchsatz in einem realisierbaren Zeittaktverhältnis von zum Beispiel fünfzehn Sekunden zu realisieren, muß der Durchsatzwert durch 240 dividiert werden. Das ergibt circa 50 g, hierfür ist ein Raum von 70 cm³ nötig. Da dieser Wert einen Mittelwert darstellt, muß von einem Minimum samt Volumen des Sammelraumes von 50 cm³ und einem Maximum des Sammelraumes von 100 cm³ ausgegangen werden.

Ausgehend von diesen Überlegungen kann man den Sammelraum 20 bemessen, indem man von dem stündlichen Durchsatz an armer Lösung durch das System ausgeht, der bei 50 kg pro Stunde liegt. Dividiert man diesen Durchsatz durch dasselbe Zeittaktverhältnis, also durch 240, ergibt sich eine Masse von 200 g, was einem Volumenraum von 280 cm³ entspricht. Auch dieser Volumenwert stellt einen Mittelwert dar, die Bandbreite des Volumens reicht im Minimum von 200 cm³ bis zum Maximum von 400 cm³. Man kann nun sagen, daß sich das Verhältnis der Sammelräume 10 und 20 beschreiben läßt, indem man ansetzt, daß sich das Volumen des Sammelraumes 10 zum Volumen des Sammelraumes 20 verhält, wie der Stundendurchsatz von Ammoniak zum Stundendurchsatz an armer Lösung. Die Division der vorhin ermittelten Ziffer ergibt ein Verhältnis von 0,2 bis 0,25. Für diesen Wert spricht, daß am tiefsten Betriebspunkt, bei dem reiner Wärmepumpenbetrieb gefahren wird, die Ströme Kältemitteldampf und arme Lösung sich etwa wie 1 : 5 bis 1 : 4 verhalten. Bei höheren Außentemperaturen geht das Verhältnis in Richtung 1 : 3 bis maximal 1 : 1,5, bei niedrigeren Temperaturen auch in Richtung 1 : 10 und mehr. Bei Kenntnis des für alle Außentemperaturen besten und möglichen Verhältnisses NH Kältemitteldampf zu NH /H O arme Lösung lassen

0093345

sich immer genau die richtigen und thermodynamisch günstigsten Mengen an Dampf und armer Lösung in den Verdampfer und Absorber einspritzen, und es wird darüber hinaus der Gesamtprozeß stets unter Kontrolle gehalten. Eine solche Steuerung setzt eine gezielte Sammelbehälter-Füllstandssteuerung und Überwachung voraus, z. B. als Funktion der Außentemperatur oder des Druckes oder der Temperaturen im Hochdruckteil der Anlage. Für den Fall, daß sich in beiden Behältern nicht die richtigen Mengen bzw. Verhältnisse einstellen, würde man durch Schalten des Bypaß-Ventiles 51 so lange warten, bis die richtigen Mengen und die richtigen Verhältnisse in beiden Behältern 10 und 19 eingestellt sind.

Aus dem Diagramm der Figur drei folgt, daß das Pulspausenverhältnis der Betätigung beziehungsweise des Schließens, das heißt Sammelns, der Ventile 11 und 19 in Abhängigkeit von der Leistung der Wärmepumpe linear proportional gemäß einer Kurve 30 gesteuert werden kann: In der Abszisse ist ein Pulspausenverhältnis P zu P von null bis eins dargestellt. Ein Verhältnis von null bedeutet, daß während des gesamten Pulses die Öffnungszeit null ist, das heißt die Sammelzeit der Gesamtperiode entspricht. Bei einem Pulspausenverhältnis von eins bedeutet das, daß die Öffnungszeit die Gesamtdauer der Periode beherrscht. Ein Pulspausenverhältnis von fünfzig Prozent heißt demgemäß, daß die Ein- und Ausschaltzeiten, das heißt Sammeln und Einspritzen, innerhalb einer Periode jeweils gleich sind.

In der Ordinate ist die Leistung von null bis hundert **0093345**
der jeweiligen Wärmepumpe dargestellt, wobei die Bezugsgröße
die an den Verbraucher 9 abgegebene Leistung ist. Bei einer
Leistung null ist das Pulspausenverhältnis gleichermaßen null.
Ein maximales Pulspausenverhältnis von zwanzig bis fünfundzwanzig Prozent wird bei hundert Prozent Leistungsabgabe der
Wärmepumpe erzielt, das heißt, daß bei einem Sammeln der Ströme von zum Beispiel zehn Sekunden die Drosselventile zwei
bis 2,5 zu öffnen, um im Verdampfer und Absorber einzuspritzen. Alle zwischenliegenden Punkte entsprechen einer linearproportionalen Interpolation zwischen diesen beiden extremen
Werten 31 und 32.

Der Brenner und die Lösungsmittelpumpe laufen unabhängig von
dem Taktverhältnis des Füllens und des Entleerens der Sammelräume kontinuierlich durch. Mit den angegebenen Behältergrößen
10 und 20 bedeutet das, daß sich im Sammler 50 für die reiche
Lösung das Flüssigkeitsvolumen periodisch um circa 250 bis
500 cm³ hebt oder senkt.

Anhand der Figur zwei soll noch illustriert werden, daß sich
die erfindungsgemäße Schaltung auch für Kompressionswärmepumpen eignet. Ein Verdichter 41 ist über eine Welle 42 von
einem Elektromotor 43 angetrieben und fördert verdichteten
Kältemitteldampf in eine Leitung 44, die zu dem Kondensator
8 führt, der einen Verbraucher 9 speist. Ausgangsseitig des
Kondensators ist im Zuge der Leitung 15 für Kältemitteldampf
der Sammelraum 10 angeordnet, dessen Ausgang von dem Ventil 11 beherrscht ist, das über die Stelleitung 13 vom Stellglied
12 beherrscht ist. Die Leitung 15 führt zum Verdampfer 16,
der über eine Rücklaufleitung 45 mit dem Verdichter 41 verbunden ist. Die Steuervorrichtung 14 ist über die Meßleitung
25 mit einem Temperatur- oder Druckfühler 24 verbunden, die
Stelleitung 13 ist an die Steuervorrichtung 14 angeschlossen. Die Funktion der Kompressionswärmepumpe gemäß Figur zwei
ist folgende: Der Elektromotor 43 treibt über die Welle 42
den Verdichter 41 an, der der Leitung 45 dampfförmiges Kältemittel unter Niederdruckverhältnissen entnimmt und es verdichtet in die Leitung 44 drückt. Das Kältemittel kondensiert
im Kondensator 8 unter dem Einfluß der Kühlwirkung des Verbrauchers 9, der aufgeheizt wird. Das kondensierte Kältemittel wird ausgangsseitig des Kondensators über die Leitung
15 in den Sammelraum 10 gegeben, den es nach Maßgabe der
Stellbefehle des Stellgliedes 12, das von der Steuervorrichtung 14 beherrscht wird, verlassen kann. Das Kältemittel wird
somit über die Leitung 15 schubweise in den Verdampfer 16
gegeben, wo es unter Wärmeaufnahme aus der Umwelt verdampft
und in die Leitung 45 zurück zum Verdichter gelangt.

Zur Realisierung dieser Schaltung beziehungsweise dieses
Regelverfahrens wird im Unterschied zu herkömmlichen nicht
regelbaren Kompressoren in Standard-Elektro-Kompressionswärmepumpen ein regelbarer Kompressor, jedoch mindestens ein
Zwei-Stufen-Kompressor benötigt. Unter einem Zwei-Stufen-Kompressor wird ein Kompressor verstanden, der außer mit seiner
Nenndrehzahl und Nennleistungsaufnahme auch noch bei einer zum Beispiel um ein Drittel bis ein Fünftel kleineren Drehzahl mit entsprechend kleinerer Leistungsaufnahme arbeiten kann. Die Sammelphase (Pause) bedeutet dann ein entsprechend verlangsamtes Anfüllen des Sammelbehälters mit kleinerer Kompressordrehzahl und kleinerer Leistungsaufnahme, während die Einspritzphase (Puls) den Betrieb bei Vollast (Nenndrehzahl mit entsprechend höherer Leistungsaufnahme) bedeutet. Durch stetige Veränderung des Pulspausenverhältnisses, entsprechend dem erforderlichen Wärmebedarf von tiefen zu hohen Außentemperaturen mit den zugehörigen notwendigen Vor- und Rücklauftemperaturen, ist eine sehr gute Anpassung der Elektro-Kompressionswärmepumpe an das Heizsystem möglich. Die Elektro-Kompressionswärmepumpe arbeitet damit nicht mehr im Ein-/Ausbetrieb, sondern pendelt zwischen Grundlast und Vollast je nach Pulspausenverhältnis. Vorteilhaft ist wie bei der Absorptionswärmepumpe, daß man mit einer Festdrossel arbeiten kann und die Netzbelastung durch die harten Ein- und Ausschaltvorgänge (Anlaufströme etc.) vermieden werden (Kosteneinsparung, einfache Drosselorgane, konstruktiv). Ferner wirkt sich ein rampenförmiger gleitender Übergang von Vollast auf Teillast auch auf die Lebensdauer des Kompressors günstig aus. Thermodynamisch lassen sich außerdem damit höhere Jahreswirkungsgrade erzielen wegen sowohl kleinerer Stillstandsverluste der Anlage als auch dadurch, daß der gesamte Kältekreislauf nicht dauernd im vollinstationären Betrieb (ein/aus) gefahren wird.

Die Leistung der Wärmepumpe, sei es der Absorptions- oder

**0093345**

der Kompressionswärmepumpe, wird durch den Temperatur- beziehungsweise Druckfühler 24 ermittelt. Somit sind die Signale auf der Leitung 25 ein Maß für die dem Verbraucher 9 zukommende Leistung. Nach Maßgabe dieser Leistung wird durch Stellbefehle auf den Leitungen 13 beziehungsweise 23 das Pulspausenverhältnis der Öffnungs- beziehungsweise Schließzeiten des Ventils 11 beziehungsweise der Ventile 11 und 19 gesteuert. Bei hoher Leistungsabgabe herrscht ein Pulspausenverhältnis in der Nähe von zwanzig bis fünfundzwanzig Prozent vor, bei ganz geringer Leistungsabgabe ein Pulspausenverhältnis von drei bis fünf Prozent.

Selbstverständlich ist auch die Anwendung der Sammelräume und des schubweisen Transportes von Kältemitteln und Lösungen bei Resorptionswärmepumpen möglich.

Joh. Vaillant GmbH u. Co

EP 884

- 1 -


Ansprüche


1. Wärmepumpe mit einem Generator, einem Kondensator,
einer Expansionsdrosselstelle und einem Verdampfer, die innerhalb eines Kreislaufes verbunden sind,
dadurch gekennzeichnet, daß im Zuge des Kreislaufes
stromauf der Expansionsdrosselstelle (11, 21) ein
Sammelraum (10, 20) angeordnet ist.


2. Wärmepumpe nach Anspruch eins, dadurch gekennzeichnet, daß auslaßseitig des Sammelraumes (10, 19)
ein Auslaßventil (11, 21) angeordnet ist, dessen
Öffnungs-/Schließzeiten nach einem Pulspausenverhältnis getaktet sind.


3. Wärmepumpe nach Anspruch eins oder zwei, dadurch
gekennzeichnet, daß die Wärmepumpe als Absorptions-

- 2 -

**0093345**

wärmepumpe ausgestaltet ist und einen Sammelraum
im Zuge des Kältemitteldampf- und des Lösungsmittelweges aufweist.

4. Wärmepumpe nach einem der Ansprüche eins bis drei,
dadurch gekennzeichnet, daß das Pulspausenverhältnis der Öffnungs-/Schließzeiten des Auslaßventils
zwischen null und fünfundzwanzig Prozent (Pulszeit/
Periodendauer) mit steigender Leistung der Wärmepumpe variabel gesteuert ist.

5. Wärmepumpe nach Anspruch vier, dadurch gekennzeichnet,
daß das Pulspausenverhältnis linearproportional
mit steigender Leistung gesteuert ist.

6. Wärmepumpe nach Anspruch fünf, dadurch gekennzeichnet, daß das Pulspausenverhältnis linearproportional
mit steigenden Werten der Vor- und Rücklauftemperatur
am Verbraucher gesteuert ist.

7. Wärmepumpe nach Anspruch fünf, dadurch gekennzeichnet, daß das Pulspausenverhältnis linearproportional mit steigenden Druckwerten im Hochdruckteil
der Sorptionswärmepumpe gesteuert ist.

8. Wärmepumpe nach Anspruch fünf, dadurch gekennzeichnet, daß das Pulspausenverhältnis linearproportional mit steigenden Temperaturwerten im Hochdruckteil der Sorptionswärmepumpe gesteuert ist.    **0093345**

9.    Wärmepumpe nach Anspruch fünf, dadurch gekennzeichnet, daß bei einer Kompressionswärmepumpe der Kompressor als Stufenkompressor ausgebildet ist und daß die Umschaltung der Laufzeitdauer von kleiner und großer Leistung linearproportional mit steigender Leistung der Wärmepumpe gesteuert ist.

10.    Wärmepumpe nach Anspruch fünf oder neun, dadurch gekennzeichnet, daß das Laufzeitverhältnis des Stufenkompressors linearproportional mit steigenden Vor- und Rücklauftemperaturen am Verbraucher der Wärmepumpe gesteuert ist.

11.    Wärmepumpe nach Anspruch fünf oder neun, dadurch gekennzeichnet, daß das Laufzeitverhältnis der Stufen des Stufenkompressors in Abhängigkeit von steigenden Drücken im Kondensator in Richtung auf Betriebsverlängerung in der Vollaststufe gesteuert ist.

12.    Wärmepumpe nach Anspruch fünf oder neun, dadurch gekennzeichnet, daß das Laufzeitverhältnis der Stufen des Stufenkompressors in Abhängigkeit von der Temperatur im Kondensator der Wärmepumpe gesteuert ist, wobei steigenden Temperaturen im Kondensator längere Laufzeiten in der höheren Kompressorstufe

zugeordnet sind.

0093345

Fig.1

0093345

Fig. 2

0093345